# FASCICULE DE BREVET EUROPEEN

(11) **EP 1 415 871 B1**
(45) Date de publication et mention de la délivrance du brevet: **30.08.2006**
(21) Numéro de dépôt: 03292499.5
(22) Date de dépôt: 09.10.2003
(51) Int. Cl.: B60R 22/03, B60N 2/20

(54) **Dispositif escamotable de retenue de la sangle d'une ceinture de sécurité**
Einklappbare Sicherheitsgurtfangvorrichtung
Retractable device for holding a safety belt

(30) Priorité: 31.10.2002 FR 0213707
(43) Date de publication de la demande: 06.05.2004
(73) Titulaire: Peugeot Citroen Automobiles SA, 92200 Neuilly sur Seine (FR)
(72) Inventeur: Combeau, Frédéric, 25200 Grand Charmont (FR); Sandoz, Christian, 25700 Mathay (FR)
(74) Mandataire: Coester, Jacques Charles

(56) Documents cités:
- EP-A- 1 193 142
- FR-A- 2 749 815
- GB-A- 2 172 493
- US-A- 4 323 278
- US-A1- 2001 040 369

## Description

La présente invention concerne un dispositif escamotable de retenue de la sangle d'une ceinture de sécurité.

Aux places avant d'un véhicule à deux portes latérales et plus particulièrement d'un véhicule de type trois portes (deux portes latérales et un hayon arrière), il est souvent difficile d'atteindre la sangle d'une ceinture de sécurité. En effet, la sangle se trouve, en position de repos, au niveau du pied central qui est situé plus en arrière que pour un véhicule classique de type cinq portes. Ainsi la sangle, au lieu de se trouver en position de repos juste derrière le siège à une distance facilement atteinte par l'occupant du siège, est beaucoup plus éloignée du passager qui doit alors se contorsionner vers l'arrière pour atteindre la sangle.

La présente invention vise à résoudre le problème ci-dessus en créant un dispositif escamotable de retenue de la sangle d'une ceinture de sécurité permettant un rangement de la sangle à proximité de l'utilisateur sans gêner cependant l'accès des passagers aux places arrière et qui, du fait de son caractère escamotable, permet à l'utilisateur de choisir s'il veut employer le dispositif ou laisser la sangle au repos à son endroit habituel.

En outre, et bien que l'invention présente un intérêt particulier pour des véhicules à deux portes latérales, elle peut être utilisée également pour un véhicule à quatre portes latérales en permettant de rapprocher, en position rangée de la sangle, celle-ci de l'utilisateur.

Par le document EP 1 193 142 A, et notamment le passage des lignes 24 à 26 de la colonne 4 de ce document, on connaît un dispositif escamotable de retenue de la sangle d'une ceinture de sécurité applicable notamment à un véhicule ne comportant que deux portes d'accès latérales au véhicule et plus particulièrement à un véhicule de type trois portes, ce dispositif comprenant un moyen de retenue de la sangle qui est fixé sur une armature latérale du siège avant côté porte d'accès au véhicule et est muni d'un moyen de verrouillage/déverrouillage permettant un verrouillage automatique du moyen de retenue de la sangle en position rangée et un déverrouillage manuel de ce dernier en position de retenue de la sangle où une partie de celle-ci repose sur le moyen de retenue pour rendre la sangle accessible à la personne assise sur le siège, l'armature latérale du siège incorporant une palette de commande du pivotement du dossier du siège permettant l'accès aux places arrière et le moyen de retenue de la sangle étant monté sur ladite palette de commande.

Conformément à l'invention, le dispositif est caractérisé en ce que cette palette de commande est montée en rotation sur l'armature latérale du dossier du siège entre une position escamotée contre l'armature et une position déployée permettant de rabattre le dossier vers sa position pivotée.

Selon d'autres caractéristiques avantageuses de l'invention :
- le moyen de retenue de la sangle est monté à rotation sur la palette de commande autour d'un axe parallèle ou confondu avec l'axe de rotation de la palette de commande, entre une position rangée contre cette palette de commande et une position sortie de retenue de la sangle ;
- le moyen de verrouillage/déverrouillage comprend un ressort de rappel du moyen de retenue en position déverrouillée ;
- le moyen de verrouillage/déverrouillage comprend un organe de maintien du moyen de retenue en position verrouillée ;
- le moyen de retenue de la sangle est formé d'une boucle de fil métallique enrobé de matière plastique et reliée de manière articulée à l'armature latérale du dossier du siège ;
- le ressort de rappel est un ressort hélicoïdal enroulé autour de l'axe d'articulation de la boucle et dont les extrémités exercent un couple de rappel de la boucle à sa position déverrouillée ;
- la boucle de fil métallique présente, à son extrémité libre, une partie recourbée de retenue de la sangle dans le sens opposé au siège ;
- l'organe de maintien est une patte élastique manoeuvrable manuellement et comportant une extrémité en forme de crochet de retenue de la branche et transversale de la boucle ;

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant un mode de réalisation de l'invention et dans lesquels:
- la figure 1 montre la sangle d'une ceinture de sécurité d'un véhicule de type trois portes d'une part dans sa position habituelle au niveau du pied central du véhicule et d'autre part en position d'appui sur le dispositif de retenue escamotable selon l'invention ;
- la figure 2A montre le dispositif de retenue de la figure 1 en position rangée dans la palette de commande du pivotement du dossier d'un siège avant ;
- la figure 2B montre une variante de réalisation de la boucle illustrée à la figure 2A ;
- la figure 3A montre le moyen de retenue des figures 1 et 2A tel qu'extrait de la palette ;
- la figure 3B montre le moyen de retenue de la figure 2B tel qu'extrait de la palette ;
- la figure 4 est une vue schématique de la partie latérale du dossier d'un siège muni du dispositif escamotable selon l'invention en position rangée dans la palette de commande ;
- la figure 5 est une vue schématique correspondant à la figure 4 du dispositif escamotable en position de retenue de la sangle d'une ceinture de sécurité ; et
- les figures 6 et 7 sont des vues schématiques qui correspondent à la figure 5 et montrent le dispositif escamotable lors de l'utilisation de la palette de commande pour permettre le pivotement du dossier du siège avant et autoriser l'accès aux places arrière.

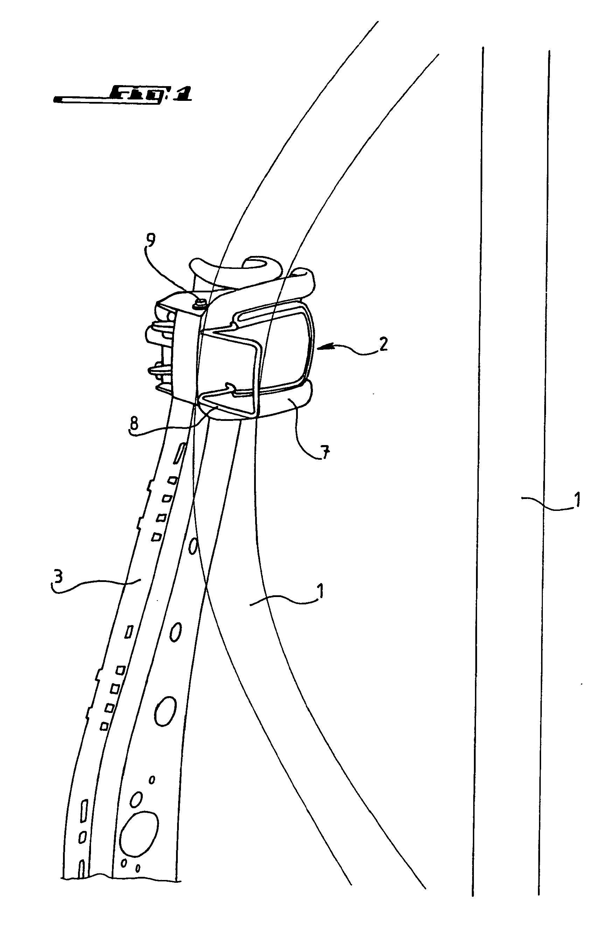

A la figure 1 on a montré la sangle 1 d'une ceinture de sécurité de véhicule, d'une part à droite, dans sa position habituelle rangée au niveau du pied central du véhicule et, d'autre part à gauche, dans sa position rangée selon l'invention en appui sur le dispositif escamotable de retenue de la sangle qui est représenté en son ensemble par la référence 2.

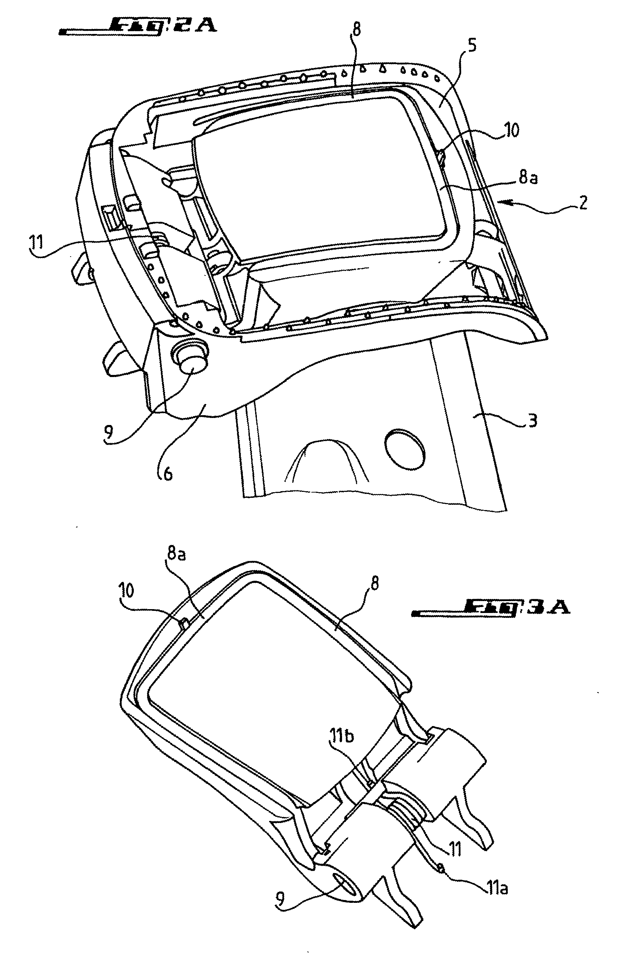

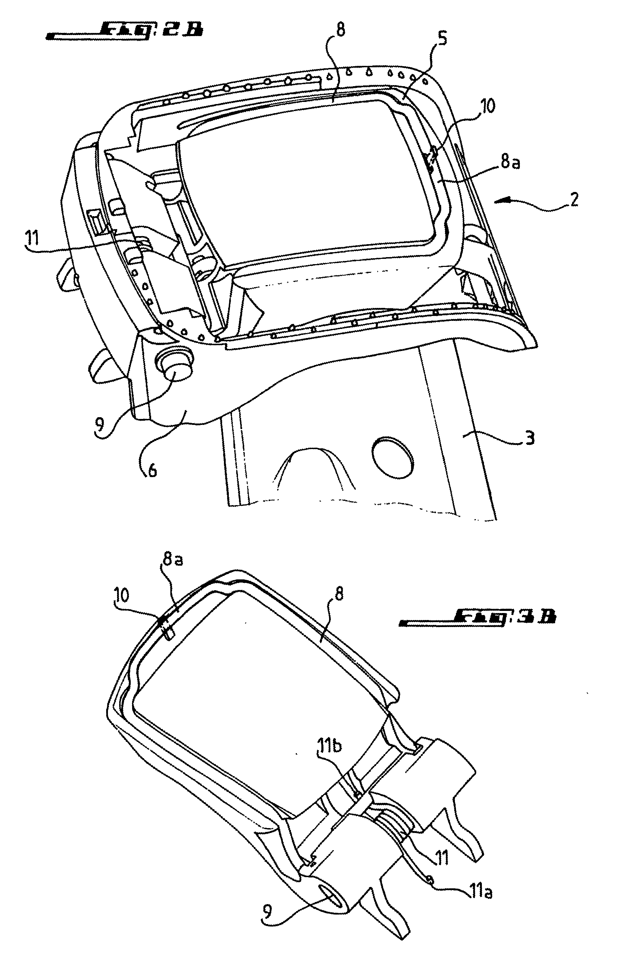

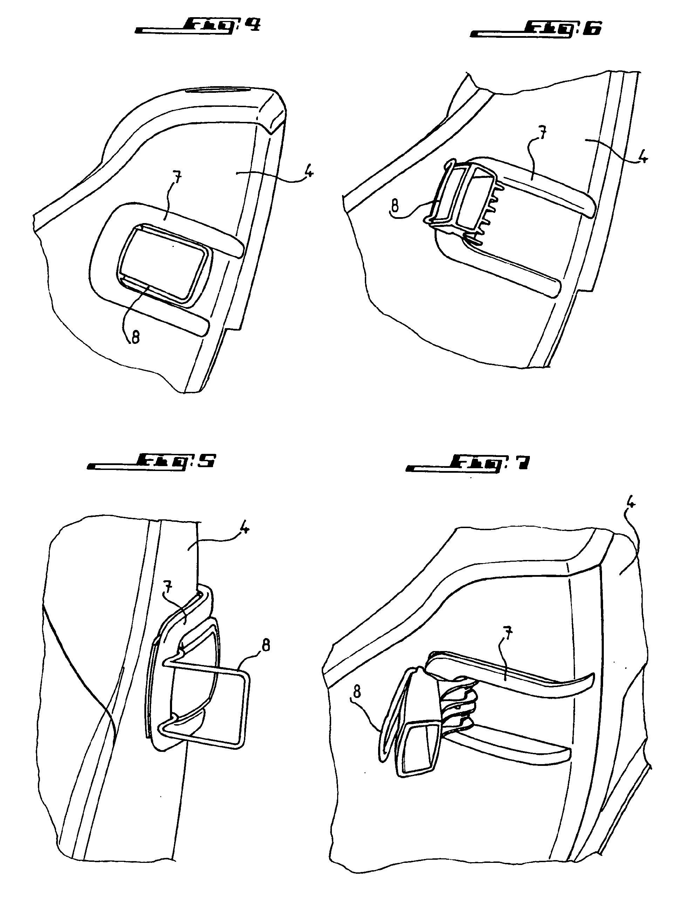

Comme cela ressort des dessins, le dispositif 2 est fixé sur une armature latérale 3 du dossier 4 d'un siège (figures 4 à 7), ce siège étant l'un des sièges avant côté porte d'accès du véhicule et l'écart entre la sangle 1 dans sa position rangée habituelle à droite de la figure et sa position rangée selon l'invention à gauche de la figure, c'est-à-dire l'écart avec le siège au nominal est alors de l'ordre de 20 centimètres. La sangle, ainsi maintenue sur le côté du dossier, peut alors facilement être atteinte par la personne assise sur le siège sans avoir à se contorsionner pour atteindre cette sangle.

Ayant ainsi décrit l'invention dans sa généralité on va maintenant montrer comment le dispositif 2 peut être réalisé.

Tout d'abord et comme représenté aux dessins, le dispositif escamotable 2 de retenue de la sangle 1 est de préférence disposé sur la palette 5 de commande de pivotement du dossier 4. La palette 5 est elle-même montée, par l'intermédiaire d'un boîtier 6 (muni de son enjoliveur 7 visible à la figure 1 et qui s'adapte sur ce boîtier), sur l'armature latérale 3 du dossier et permet de passer de la position d'appui du siège (figures 4 à 6) à la position pivotée de celui-ci de manière à permettre l'accès aux places arrière du véhicule.

Selon l'invention, le dispositif 2 comprend une boucle de fil métallique 8 enrobée de matière plastique et relié de manière articulée en 9 à l'armature latérale 3, ici par l'intermédiaire du support 6 de la palette de commande 5.

Aux figures 2A, 2B, 3A, 3B et 4, la boucle 8 est représentée en position rangée en étant maintenue dans la position verrouillée par une patte élastique 10 fixée sur un support du dispositif 2 et comprenant une extrémité en forme de crochet montée transversalement à la boucle. Un ressort hélicoïdal 11 est enroulé autour de l'axe d'articulation 9 de la boucle 8 et ces extrémités 11a, 11b exercent un couple de rappel permettant de ramener la boucle 8 en position sortie lorsque cette boucle est déverrouillée par une action manuelle exercée sur la patte élastique 10. Lorsque la boucle 8 est déverrouillée, elle prend alors, par appui contre le boîtier 6, une position pivotée de 90° par rapport à la position rangée des figures 2A, 2B, 3A, 3B et 4, et elle peut ainsi retenir la sangle 1 en fournissant donc un moyen de retenue de la sangle dans une position où celle-ci repose sur la boucle 8 pour la rendre facilement accessible à la personne assise sur le siège comme cela ressort d'ailleurs de la figure 1.

Après avoir dégagé la sangle 1, un simple appui sur la boucle 8 permet, en s'opposant au ressort de rappel 11 qui participe ainsi au déverrouillage, de ramener la boucle dans sa position rangée où elle est maintenue par la patte élastique 10.

Aux figures 4 et 5 on a respectivement montré la boucle 8 en position rangée dans la palette 5 et dans sa position permettant de retenir la sangle 1 sans agir sur la palette 5 de commande du pivotement du dossier 4. Les figures 6 et 7 montrent la boucle 8 dans sa position de retenue de la sangle lorsque la palette de commande 5 a été actionnée afin de permettre de manière connue un pivotement du dossier 4 autorisant un accès aux places arrière du véhicule.

Comme on le voit aux figures 2B et 3B l'extrémité libre 8a ou branche transversale de la boucle métallique 8, au lieu d'être rectiligne comme dans les autres figures, peut présenter, une partie recourbée de retenue de la sangle dans le sens opposé au siège 4.

On comprend que la disposition conforme à l'invention ne nécessite aucun mécanisme complexe, que le dispositif est escamotable et que, par une simple pression sur la boucle 8, on peut faire glisser la sangle afin de dégager l'accès aux places arrière. En outre, au cas où le dispositif est intégré dans la palette de commande d'accès des places arrière, celui-ci est presque invisible et, comme cela ressort de ce qui précède, il suffit d'ajouter une boucle formée d'un fil métallique enrobée de plastique, un ressort de rappel et une patte élastique de retenue de la boucle sur une palette de type connu. Une simple pression exercée sur la patte élastique permet alors de mettre en place la boucle, afin de supporter la sangle et comme on l'a vu plus haut, il suffit d'appuyer sur la boucle pour la ranger ou pour faire glisser la sangle lors d'un accès aux places arrière.

Bien que cela ne soit pas représenté aux dessins, dans une variante de réalisation du dispositif escamotable conforme à l'invention, le ressort de rappel 11 peut être adapté pour plaquer la boucle 8 sur la palette 5 afin d'assurer une position de rangement automatique. Dans ce cas, la patte élastique 10 est supprimée. Pour mettre alors la boucle en position d'utilisation, il faut la faire pivoter jusqu'à un point de verrouillage assuré par un système de billage de type connu. Pour ranger la boucle, il faut pousser sur celle-ci afin de déverrouiller le billage. Une fois ce billage déverrouillé, la boucle se plaque automatiquement sur la palette du fait du ressort de rappel 11.

## Revendications

1. Dispositif escamotable de retenue de la sangle (1) d'une ceinture de sécurité applicable notamment à un véhicule ne comportant que deux portes d'accès latérales au véhicule et plus particulièrement à un véhicule de type trois portes, comprenant un moyen de retenue (8) de la sangle (1) qui est fixé sur une armature latérale (3) du dossier (4) du siège avant côté porte d'accès au véhicule et est muni d'un moyen de verrouillage/déverrouillage (10, 11) permettant un verrouillage automatique du moyen de retenue de la sangle en position rangée et un déverrouillage manuel de ce dernier en position de retenue de la sangle où une partie de celle-ci repose sur le moyen de retenue (8) pour rendre la sangle (1) accessible à la personne assise sur le siège, l'armature latérale (3) du dossier (4) du siège incorporant une palette de commande (5) du pivotement du dossier (4) du siège permettant l'accès aux places arrière et le moyen de retenue (8) de la sangle (1) étant monté sur ladite palette de commande, **caractérisé en ce que** cette palette de commande (5) est montée à rotation sur l'armature latérale (3) du dossier (4) du siège entre une position escamotée contre l'armature et une position déployée permettant de rabattre le dossier (4) vers sa position pivotée.

2. Dispositif selon la revendication 1, **caractérisé en ce que** le moyen de retenue (8) de la sangle (1) est monté à rotation sur la palette de commande (5) autour d'un axe parallèle ou confondu avec l'axe de rotation de ladite palette de commande, entre une position rangée contre cette palette de commande (5) et une position sortie de retenue de la sangle (1).

3. Dispositif selon l'une des revendications 1 ou 2, **caractérisé en ce que** le moyen de verrouillage/déverrouillage comprend un ressort de rappel (11) du moyen de retenue (8) en position déverrouillée.

4. Dispositif selon l'une des revendications 1 à 3, **caractérisé en ce que** le moyen de verrouillage/déverrouillage comprend un organe de maintien (10) du moyen de retenue en position verrouillée.

5. Dispositif selon l'une des revendications 1 à 4, **caractérisé en ce que** le moyen de retenue de la sangle (1) est formé d'une boucle de fil métallique (8) enrobé de matière plastique et reliée de manière articulée (en 9) à l'armature latérale (3) du dossier (4) du siège.

6. Dispositif selon la revendication 5, lorsque considéré en combinaison avec la revendication 3, **caractérisé en ce que** le ressort de rappel (11) est un ressort hélicoïdal enroulé autour de l'axe d'articulation (9) de la boucle (8) et dont les extrémités (11a, 11b) exercent un couple de rappel de la boucle (8) à sa position déverrouillée.

7. Dispositif selon la revendication 5 ou 6, **caractérisé en ce que** la boucle de fil métallique (8) présente à son extrémité libre une partie recourbée de retenue de la sangle dans le sens opposé au siège.

8. Dispositif selon l'une des revendications 1 à 7, **caractérisé en ce que** l'organe de maintien du moyen de retenue en position verrouillée est une patte élastique (10) manoeuvrable manuellement et comportant une extrémité en forme de crochet de retenue de la branche transversale (8a) de la boucle (8).

## Claims

1. Retractable device for holding the strap (1) of a safety belt applicable particularly to a vehicle with only two side access doors to the vehicle and more particularly a vehicle of the type with three doors, comprising a means of holding (8) the strap (1) which is fixed on a side frame (3) of the back (4) of the front seat on the side of the access door to the vehicle and is fitted with a means of locking/unlocking (10, 11) allowing the means of holding the strap to be locked automatically in the position where it has been put away and to be unlocked manually in the position for holding the strap, where part of it rests on the means of holding (8) to make the strap (1) accessible to the person sitting on the seat, the side frame (3) of the back (4) of the seat incorporating a control arm (5) for pivoting the back (4) of the seat, allowing access to the rear seats and the means of holding (8) the strap (1) being fitted on this control arm, **characterised in that** this control arm (5) is fitted to rotate on the side frame (3) of the back (4) of the seat between a retracted position against the frame and an extended position, allowing the back (4) to be pulled down to its pivoted position.

2. Device according to claim 1, **characterised in that** the means of holding (8) the strap (1) is fitted to rotate on the control arm (5) around a parallel axis or together with the rotation axis of this control arm between a position where it has been put away against this control arm (5) and a position where it has been brought out for holding the strap (1).

3. Device according to one of claims 1 or 2, **characterised in that** the means of locking/unlocking comprises a spring (11) for returning the means of holding (8) in the unlocked position.

4. Device according to one of claims 1 to 3, **characterised in that** the means of locking/unlocking comprises a device for keeping (10) the means of holding in the locked position.

5. Device according to one of claims 1 to 4, **characterised in that** the means of holding the strap (1) is formed by a loop of wire (8) covered in plastic material and connected in an articulated way (in 9) to the side frame (3) of the back (4) of the seat.

6. Device according to claim 5, when considered in combination with claim 3, **characterised in that** the return spring (11) is a helicoidal spring wound around the articulation axis (9) of the loop (8), the ends of which (11 a, 11 b) exercise a torque to return the loop (8) to its unlocked position.

7. Device according to claim 5 or 6, **characterised in that** the wire loop (8) has a curved part at its free end for holding the strap in the opposite direction to the seat.

8. Device according to one of claims 1 to 7, **characterised in that** the device for keeping the means of holding in the locked position is a flexible lug (10), which can be manoeuvred manually, with an end in the form of a hook for holding the transverse section (8a) of the loop (8).

## Patentansprüche

1. Versenkbare Haltevorrichtung für den Gurt (1) eines Sicherheitsgurts, insbesondere anwendbar auf ein Fahrzeug mit nur zwei Seitentüren für den Zugang zum Fahrzeug, und speziell auf ein Fahrzeug des dreitürigen Typs, umfassend ein Haltemittel (8) für den Gurt (1), das auf der Seite der Zugangstür zum Fahrzeug an einem seitlichen Beschlag (3) der Rückenlehne (4) des Vordersitzes befestigt und mit einem Mittel zur Verriegelung/Entriegelung (10, 11) versehen ist, das eine automatische Verriegelung des Haltemittels für den Gurt in der Einklapposition und eine manuelle Entriegelung des letzteren in die Halteposition für den Gurt erlaubt, in der ein Teil desselben auf dem Haltemittel (8) aufliegt, um den Gurt (1) für die auf dem Sitz sitzende Person zugänglich zu machen, wobei der seitliche Beschlag (3) der Rückenlehne (4) des Sitzes einen Betätigungsgriff (5) zum Schwenken der Rückenlehne (4) des Sitzes aufweist, der den Zugang zu den Plätzen auf den Rücksitzen erlaubt, und das Haltemittel (8) des Gurts (1) auf dem Betätigungsgriff montiert ist,
**dadurch gekennzeichnet,**
**daß** dieser Betätigungsgriff (5) zwischen einer Versenkposition am Beschlag und einer Ausstellposition, die das Umklappen der Rückenlehne (4) in ihre Schwenkposition erlaubt, drehbar am seitlichen Beschlag (3) der Rückenlehne (4) des Sitzes montiert ist.

2. Vorrichtung nach Anspruch 1, **dadurch gekennzeichnet, daß** das Haltemittel (8) für den Gurt (1) zwischen einer Einklapposition am Betätigungsgriff (5) und einer Ausklapposition zum Halten des Gurts (1) drehbar um eine parallel zur Drehachse des Betätigungsgriffs verlaufende oder mit dieser zusammenfallenden Achse auf dem Betätigungsgriff (5) montiert ist.

3. Vorrichtung nach einem der Ansprüche 1 oder 2, **dadurch gekennzeichnet, daß** das Mittel zur Verriegelung/Entriegelung eine Rückstellfeder (11) zum Rückstellen des Haltemittels (8) in die entriegelte Position umfaßt.

4. Vorrichtung nach einem der Ansprüche 1 bis 3, **dadurch gekennzeichnet, daß** das Mittel zur Verriegelung/Entriegelung eine Festhalteeinrichtung (10) zum Festhalten des Haltemittels in der verriegelten Position umfaßt.

5. Vorrichtung nach einem der Ansprüche 1 bis 4, **dadurch gekennzeichnet, daß** das Haltemittel für den Gurt (1) als mit Kunststoff umhüllter Bügel aus Metalldraht (8) ausgeführt und schwenkbar (bei 9) mit dem seitlichen Beschlag (3) der Rückenlehne (4) des Sitzes verbunden ist.

6. Vorrichtung nach Anspruch 5 in Verbindung mit Anspruch 3, **dadurch gekennzeichnet, daß** es sich bei der Rückstellfeder (11) um eine um die Drehachse (9) des Bügels (8) gewickelte Schraubenfeder handelt, deren Enden (11a, 11b) ein Rückstellmoment zur Rückstellung des Bügels (8) in seine entriegelte Position ausüben.

7. Vorrichtung nach einem der Ansprüche 5 oder 6, **dadurch gekennzeichnet, daß** der Bügel aus Metalldraht (8) an seinem freien Ende einen in der dem Sitz entgegengesetzten Richtung gebogenen Abschnitt zum Halten des Gurts aufweist.

8. Vorrichtung nach einem der Ansprüche 1 bis 7, **dadurch gekennzeichnet, daß** es sich bei der Festhalteeinrichtung zum Festhalten des Haltemittels in der verriegelten Position um eine von Hand zu betätigende, elastische Lasche (10) handelt, die ein hakenförmiges Ende zum Halten des Querabschnitts (8a) des Bügels (8) umfaßt.
